# EUROPÄISCHE PATENTANMELDUNG

(11) **EP 4 044 303 A1**
(43) Veröffentlichungstag der Anmeldung: **17.08.2022**
(21) Anmeldenummer: 22153530.5
(22) Anmeldetag: 26.01.2022
(51) Int. Cl.: H01M 8/043, H01M 8/04746

(54) **LUFTVERSORGUNG EINER BRENNSTOFFZELLE**

(30) Priorität: 16.02.2021 DE 102021201473
(71) Anmelder: KNORR-BREMSE Systeme für Nutzfahrzeuge GmbH, 80809 München (DE)
(72) Erfinder: GEIS-ESSER, Daniel, 81377 München (DE); Compera, Yves, 85748 Garching bei München (DE)

(57) **Zusammenfassung**

Es wird ein Verfahren zur Versorgung einer Brennstoffzelle mit Druckluft eines Fahrzeugs offenbart, mit den Schritten:
- Schritt (A): Versorgen der Brennstoffzelle (FC) mit einem Brennstoff und einem Oxidationsmittel durch eine Primärversorgungseinrichtung (4);
- Schritt (B): Entnehmen von Druckluft (2) aus einer Druckluftquelle (1); und
- Schritt (C): Zuführen der Druckluft (2) zu der Brennstoffzelle (FC).

Ferner werden eine Vorrichtung, ein Versorgungssystem, ein Fahrzeug, ein Computerprogrammprodukt sowie ein Speichermedium offenbart.

## Beschreibung

Die vorliegende Erfindung betrifft ein Verfahren zur Luftversorgung einer Brennstoffzelle. Ferner betrifft die vorliegende Erfindung eine Vorrichtung, ein Versorgungssystem und ein Fahrzeug zur Durchführung des Verfahrens. Schließlich betrifft die Erfindung ein Computerprogrammprodukt und ein Speichermedium.

Bekannt ist, bei Fahrzeugen, die eine Brennstoffzelle aufweisen, die Brennstoffzelle durch einen Verdichter mit einem Luftstrom zu versorgen, um der Brennstoffzelle den benötigten Sauerstoff als Oxidationsmittel zuzuführen, welcher in Verbindung mit einem Brennstoff, vorzugsweise Wasserstoff, reagiert, wodurch Strom erzeugt wird. In der Regel wird der Sauerstoff mittels eines Luftstroms zugeführt. Neben Wasserstoff können auch andere Brennstoffe, wie Methanol, Butan oder Erdgas Verwendung finden. Problematisch ist hier, insbesondere wenn ein Verdichter vorgesehen ist, der auf eine stationäre Versorgung der Brennstoffzelle optimiert ist, ein dynamischer Betrieb bzw. Instationärbetrieb der Brennstoffzelle bzw. des Verdichters, bei dem die Brennstoffzelle von einer niedrigeren Last zu einer höheren Last wechseln muss. D.h. es kann sein, dass der Sauerstoffbedarf der Brennstoffzelle relativ schnell steigt und der installierte Verdichter in diesem Betriebszustand diesen Sauerstoffbedarf nicht bedienen kann. Der Verdichter ist im Allgemeinen einer Primärversorgungseinrichtung zuzurechnen, die die Brennstoffzelle mit Sauerstoff versorgt.

Es ist daher Aufgabe der vorliegenden Erfindung, eine Möglichkeit aufzuzeigen, eine Luftversorgung der Brennstoffzelle im dynamischen bzw. instationären Betrieb zu verbessern.

Diese Aufgabe wird durch die Gegenstände der unabhängigen Ansprüche gelöst. Vorteilhafte Weiterbildungen sind Gegenstand der abhängigen Ansprüche.

Erfindungsgemäß ist ein Verfahren zur Versorgung einer Brennstoffzelle eines Fahrzeugs mit Druckluft vorgesehen. Das Verfahren weist folgende Schritte auf.
- Schritt A: Versorgen der Brennstoffzelle mit einem Brennstoff und einem Oxidationsmittel durch eine Primärversorgungseinrichtung;
- Schritt B: Entnehmen von Druckluft aus einer Druckluftquelle; und
- Schritt C: Zuführen der Druckluft zu der Brennstoffzelle.

Üblicherweise erfolgt die Versorgung gemäß Schritt A mit dem Oxidationsmittel durch Luft bzw. Druckluft, die der Brennstoffzelle durch die Primärversorgungseinrichtung zugeführt wird. Der in der Luft bzw. Druckluft enthaltene Sauerstoff fungiert als Oxidationsmittel. Die Primärversorgungseinrichtung kann zu diesem Zweck einen Verdichter aufweisen. Zusätzlich wird der Brennstoffzelle Brennstoff zugeführt. Dies kann Wasserstoff sein, oder wie eingangs beschrieben ein anderer geeigneter Brennstoff, wie Methanol, Butan oder Erdgas.

Ist nachfolgend von Sauerstoff die Rede, der der Brennstoffzelle zugeführt wird, so kann darunter auch ein anderes Oxidationsmittel, wie Wasserstoffperoxid oder Salpetersäure, verstanden werden.

Vorzugsweise wird Schritt A im Stationärbetrieb der Brennstoffzelle ausgeführt. Auf diese Weise kann der Sauerstoffbedarf der Brennstoffzelle grundlegend sichergestellt werden. Es ist denkbar, die Versorgung der Brennstoffzelle im Instationärbetrieb auch über die Primärversorgungseinrichtung auszuführen, solange dies durch die Primärversorgungseinrichtung gewährleistet werden kann.

Vorzugsweise werden Schritt B und Schritt C im Instationärbetrieb der Brennstoffzelle ausgeführt. Dabei kann eine ausschließliche Versorgung der Brennstoffzelle mit der in Schritt C zugeführten Druckluft erfolgen. Vorzugsweise erfolgt die Zuführung der Druckluft gemäß Schritt C derart, dass auch bei stark ansteigendem Sauerstoffbedarf der Brennstoffzelle eine Versorgung sichergestellt ist.

Vorzugsweise werden Schritt B und Schritt C ausgeführt, wenn eine Versorgung der Brennstoffzelle mit dem Oxidationsmittel gemäß Schritt A nicht mehr möglich ist. Dies ist beispielsweise bei einem entsprechenden Ausfall der Primärversorgungseinrichtung, beispielsweise bei einem Ausfall eines darin vorgesehenen Verdichters, der Fall. Auf diese Weise kann die Brennstoffzelle aus der nun zugeführten Druckluft mit Sauerstoff als Oxidationsmittel versorgt werden.

Vorzugsweise werden die Schritte A, B und C gleichzeitig ausgeführt. Somit kann eine Grundversorgung der Brennstoffzelle durch die Primärversorgungseinrichtung erfolgen, wobei die Druckluft aus der Druckluftquelle dazu dient, kurzzeitige Sauerstoffbedarfe der Brennstoffzelle zu erfüllen, bis die Primärversorgungseinrichtung eine dauerhafte Versorgung der Brennstoffzelle wieder herstellen kann. Es ist aber auch denkbar, die Schritte B und C dauerhaft und gleichzeitig mit Schritt A auszuführen, d.h. auch dann, wenn die Primärversorgungseinrichtung einen stationären Sauerstoffbedarf der Brennstoffzelle decken könnte. Ist beispielsweise die Druckluftquelle zur kontinuierlichen Bereitstellung von Druckluft ausgebildet, z.B. durch einen Verdichter, so kann auch der Druckluftquelle kontinuierlich Druckluft gemäß der Schritte B und C entnommen werden und der Brennstoffzelle zugeführt werden. Eine solche Druckluftquelle kann insbesondere Teil eines Druckluftsystems des Fahrzeugs, wie ein Bremssystem und/oder ein Luftfedersystem sein. Somit kann erreicht werden, dass stationäre Sauerstoffbedarfe der Brennstoffzelle erfüllt werden können, die alleine durch die Primärversorgungseinrichtung nicht erfüllt werden könnten.

Wie vorstehend beschrieben ist die Druckluftquelle vorzugsweise Teil eines Druckluftsystems, insbesondere eines pneumatischen Bremssystems und/oder eines Luftfedersystems. Alternativ oder zusätzlich kann die Druckluftquelle auch einen Druckluftspeicher und/oder einen Verdichter des Fahrzeugs umfassen. Die Druckluftquelle kann speziell für die Ausführung der Schritte B und C vorgesehen sein, was vorteilhafterweise mit einer Optimierung auf die Erfüllung der Sauerstoffbedarfe der Brennstoffzelle im Insationärbetrieb verbunden ist. Alternativ kann die Druckluftquelle auch einen anderen primären Zweck erfüllen, wie die Luftspeicherung oder Luftversorgung anderer Druckluftsysteme des Fahrzeugs. Dies hätte den Vorteil, dass kein zusätzliches System im Fahrzeug vorgesehen werden muss und lediglich eine Verbindung von der Druckluftquelle zur Zuführung der Druckluft an die Brennstoffzelle geschaffen werden muss, um die Schritte B und C zu erfüllen.

Vorzugsweise erfolgt bei Ausführung von Schritt C die Zuführung der Druckluft direkt oder über Zwischenelemente, wie einen Befeuchter und/oder einen Verdichter und/oder eine Düse. Ist die Druckluft zu trocken, um für die Brennstoffzelle verwendet zu werden, kann sie bei Verwendung eines Befeuchters entsprechend mit Feuchtigkeit, insbesondere mit Wasser, angereichert werden. Auf diese Weise kann Druckluft, die einen niedrigen Feuchtegehalt aufweist oder die aktiv entfeuchtet wurde, um Verwendung in einem pneumatischen Bremssystem, in einem Luftfedersystem oder in einem anderen Druckluftsystem des Fahrzeugs zu finden, auch für die Brennstoffzelle verwendet werden. Auch ist denkbar, diese Druckluft mittels eines weiteren Verdichters weiter zu verdichten.

Vorzugsweise wird die Druckluft, die in Schritt C der Brennstoffzelle zugeführt wird, zur Spülung und/oder Reinigung und/oder Regeneration der Brennstoffzelle verwendet. Auf diese Weise kann sichergestellt werden, dass Flächen innerhalb der Brennstoffzelle von Verunreinigungen befreit werden, so dass eine Wirkungsgradverschlechterung der Brennstoffzelle, die durch die Verunreinigungen eingetreten ist, behoben werden kann.

Vorzugsweise wird die Druckluft in Schritt C über die Primärversorgungseinrichtung der Brennstoffzelle zugeführt, wobei die Druckluft vorzugsweise zur Druckerhöhung in der Primärversorgungseinrichtung und/oder zur Unterstützung eines Verdichters der Primärversorgungseinrichtung verwendet wird. Dies kann insbesondere dadurch erfolgen, dass die Druckluft in einen Ansaugbereich der Primärversorgungseinrichtung zugeführt wird. Auf diese Weise erhält die Primärversorgungseinrichtung einen höheren Luftstrom im Ansaugbereich bzw. sie entnimmt Druckluft mit einem höheren Druckniveau als ohne Verwendung der Druckluftquelle. Ein Verdichter der Primärversorgungseinrichtung kann durch die Druckluft der Druckluftquelle auch zusätzlich angetrieben werden, um schneller auf den geforderten Betriebszustand zu kommen.

Alternativ oder zusätzlich wird die Druckluft in Schritt C über eine Ausstoßseite der Primärversorgungseinrichtung der Brennstoffzelle zugeführt. Die Ausstoßseite der Primärversorgungseinrichtung ist mit der Brennstoffzelle verbunden über die der Brennstoffzelle der Sauerstoff von der Primärversorgungseinrichtung zugeführt wird.

Hier besteht die Möglichkeit, dass die Druckluft der Druckluftquelle direkt an die Ausstoßseite der Primärversorgungseinrichtung zugeführt wird. Somit kann vorteilhafterweise erreicht werden, dass sich auf der Ausstoßseite der Primärversorgungseinrichtung ein Massenstrom einstellt, der einen Unterdruck bildet, wobei dieser Unterdruck die Primärversorgungseinrichtung unterstützt, auf einen Betriebszustand mit höherem Sauerstoffmassenstrom zu wechseln. Beispielsweise wird der Unterdruck genutzt, einen Verdichter der Primärversorgungseinrichtung entsprechend zu unterstützen.

Vorzugsweise wird das Fahrzeug zumindest durch einen Teil der durch die Brennstoffzelle bereitgestellten Leistung angetrieben. Es handelt sich damit um einen Brennstoffzellenantrieb. Die Leistung der Brennstoffzelle kann jedoch auch zusätzlich oder ausschließlich für Verbraucher des Fahrzeugs verwendet werden, die nicht zum Antrieb des Fahrzeugs dienen.

Vorzugsweise ist das Fahrzeug als PKW, Nutzfahrzeug, Zugmaschine, LKW, Anhänger, Verbund aus Zugmaschine und Anhänger oder als Schienenfahrzeug, ausgebildet.

Als weiterer Aspekt der Erfindung ist eine Vorrichtung zur Durchführung des oben beschriebenen Verfahrens vorgesehen, wobei die Vorrichtung eine Schnittstelle zur Steuerung des Entnehmens der Druckluft aus der Druckluftquelle nach Schritt B und/oder eine Schnittstelle zur Steuerung des Zuführens der Druckluft nach Schritt C aufweist, wobei die Vorrichtung eine Datenverarbeitungseinheit aufweist, die zur Durchführung des oben beschriebenen Verfahrens ausgebildet ist. Die Datenverarbeitungseinheit umfasst bevorzugt elektronische Verarbeitungsmittel, die zur Durchführung des Verfahrens ausgebildet sind, wobei die Datenverarbeitungseinheit weiter entsprechende Steuersignale über die Schnittstelle(n), insbesondere Daten- oder BUS-Schnittstelle, zur Verfügung stellt, um die Druckluftquelle entsprechend Schritte B und C anzusteuern. Besonders bevorzugt ist die Vorrichtung als Antriebssteuergerät und/oder Bremssteuergerät ausgebildet. Ferner weist die Vorrichtung vorzugsweise eine Schnittstelle auf, um die Versorgung der Brennstoffzelle gemäß Schritt A zu steuern.

Als weiterer Aspekt der Erfindung ist ein Versorgungssystem für eine Brennstoffzelle vorgesehen, aufweisend:
- eine Primärversorgungseinrichtung, insbesondere mit einem Verdichter, die dazu ausgebildet ist, die Brennstoffzelle mit einem Brennstoff und einem Oxidationsmittel zu versorgen; und
- eine Schnittstelle zu einer Druckluftquelle, die dazu ausgebildet ist, der Brennstoffzelle Druckluft zuzuführen.

Vorzugsweise weist das Versorgungssystem eine oben beschriebene Vorrichtung auf. Alternativ oder zusätzlich ist das Versorgungssystem zur Durchführung des oben beschriebenen Verfahrens ausgebildet.

Die Schnittstelle umfasst vorzugsweise einen Anschluss zur Verbindung mit der Druckluftquelle.

Vorzugsweise ist die Schnittstelle zur Zuführung der Druckluft unabhängig von der Primärversorgungseinrichtung ausgebildet. Alternativ oder zusätzlich ist die Schnittstelle dazu ausgebildet, die Druckluft einer Ansaugseite und/oder einer Ausstoßseite der Primärversorgungseinrichtung zuzuführen.

Als weiterer Aspekt der Erfindung ist ein Fahrzeug zur Durchführung des oben beschriebenen Verfahrens vorgesehen, wobei das Fahrzeug eine Brennstoffzelle und eine Primärversorgungseinrichtung zur Versorgung der Brennstoffzelle mit einem Brennstoff und einem Oxidationsmittel aufweist. Ferner weist das Fahrzeug eine Druckluftquelle auf. Das Fahrzeug weist ferner eine Vorrichtung wie oben beschrieben auf und/oder das Fahrzeug ist zur Durchführung des Verfahrens nach dem oben beschriebenen Verfahren ausgebildet. Vorzugsweise ist das Fahrzeug als PKW, Nutzfahrzeug, Zugmaschine, LKW, Anhänger, Verbund aus Zugmaschine und Anhänger oder als Schienenfahrzeug ausgebildet.

Vorstehend beschriebene Vorrichtung, vorstehend beschriebenes Versorgungssystem und vorstehend beschriebenes Fahrzeug weisen vorzugsweise einzelne bei der obigen Beschreibung des Verfahrens aufgeführte Merkmale, die Vorrichtung, Versorgungssystem oder Fahrzeug betreffen, auf.

Als weiterer Aspekt der Erfindung ist ein Computerprogrammprodukt mit Codemitteln, die, wenn sie auf einer Datenverarbeitungseinheit ausgeführt werden, diese dazu veranlassen, das oben beschriebene Verfahren auszuführen. Die Datenverarbeitungseinheit ist vorzugsweise die, die in oben beschriebener Vorrichtung vorgesehen ist. Somit kann auch eine bestehende Vorrichtung, wie ein Antriebssteuergerät oder ein Bremssteuergerät, zur Durchführung des oben beschriebenen Verfahrens ausgebildet werden.

Als weiterer Aspekt der Erfindung ist ein Speichermedium zum Auslesen durch eine Datenverarbeitungseinheit vorgesehen, wobei das Speichermedium ein vorstehend beschriebenes Computerprogrammprodukt aufweist. Dadurch kann die Erfindung weitergegeben werden. Das Speichermedium umfasst vorzugsweise einen USB-Stick, eine Speicherkarte und/oder eine CD-ROM.

Die Erfindung ist nicht auf die oben beschriebenen Ausführungsformen begrenzt. Vielmehr lassen sich durch Kombination, Weglassen und/oder Austauschen einzelner Merkmale weitere Gegenstände ausbilden, die ebenso in den beanspruchten Schutzbereich fallen. Beispielsweise ist eine Kombination denkbar, bei der die Druckluft sowohl an die Ansaugseite als auch an die Ausstoßseite der Primärversorgungseinrichtung zugeführt wird.

Im Wesentlichen besteht ein Vorteil der Erfindung darin, dass durch die Verwendung von Druckluft durch erfindungsgemäßen Gegenstände eine schnelle Erhöhung der Sauerstofffördermenge an die Brennstoffzelle erreicht wird und dass auch ein schneller Druckanstieg innerhalb der Brennstoffzelle erreicht wird.

Nachfolgend erfolgt die Beschreibung bevorzugter Ausführungsformen der Erfindung anhand der beigefügten Zeichnungen.

Im Einzelnen zeigen
- Fig. 1: eine erste Ausführungsform der Erfindung,
- Fig. 2: eine zweite Ausführungsform der Erfindung, und
- Fig. 3: eine dritte Ausführungsform der Erfindung.

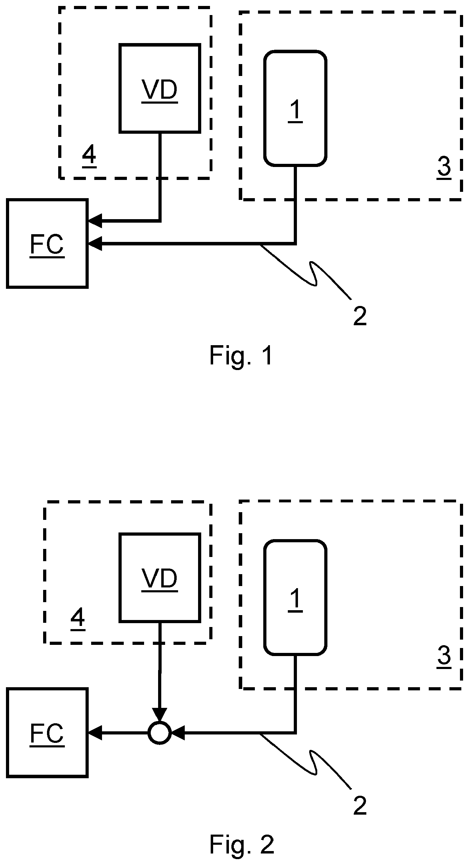

**Fig. 1** zeigt eine erste Ausführungsform der Erfindung.

Es ist eine Brennstoffzelle FC eines Fahrzeugs gezeigt, die mit einer Primärversorgungseinrichtung 4 in Verbindung steht. Die Primärversorgungseinrichtung 4 versorgt die Brennstoffzelle FC insbesondere im Stationärbetrieb mit dem benötigten Oxidationsmittel, beispielsweise mit Sauerstoff und dem benötigten Brennstoff, beispielsweise Wasserstoff. Das Oxidationsmittel wird hier durch einen Luftstrom zur Verfügung gestellt, der von einem Verdichter VD der Primärversorgungseinrichtung 4 erzeugt wird.

Ferner ist eine Druckluftquelle 1 gezeigt, die Teil eines Druckluftsystems 3 des Fahrzeugs ist. Das Druckluftsystem 3 kann beispielsweise ein pneumatisches Bremssystem und/oder ein Luftfedersystem sein. Die Druckluftquelle 1 kann insbesondere einen Druckluftspeicher und/oder einen Verdichter des Druckluftsystems 3 aufweisen.

Die Druckluftquelle 1 ist unabhängig von dem Verdichter VD bzw. der Primärversorgungseinrichtung 4 mit der Brennstoffzelle FC verbunden und kann somit Druckluft 2 unabhängig davon an die Brennstoffzelle FC zuführen.

Auf diese Weise ist es möglich, die Druckluft 2 ergänzend zu der Sauerstoffförderung der Primäreinrichtung der Brennstoffzelle FC zuzuführen. So kann bei steil ansteigendem Sauerstoffbedarf der Brennstoffzelle FC im Instationärbetrieb durch die Druckluft 2 dieser Bedarf gedeckt werden.

**Fig. 2** zeigt eine zweite Ausführungsform der Erfindung.

Es sind die gleichen Elemente wie in Fig. 1 gezeigt, mit dem Unterschied, dass hier die Druckluft 2 der Ausstoßseite der Primärversorgungseinrichtung 4 zugeführt wird.

Dies hat den Vorteil, dass sich an der Ausstoßseite ein Unterdruck bildet, der den Verdichter VD in der Erhöhung seiner Förderleistung unterstützt, so dass hier im Instationärbetrieb neben der Zuführung der Druckluft 2 an die Brennstoffzelle FC auch eine Unterstützung der Primärversorgungseinrichtung 4 erfolgt.

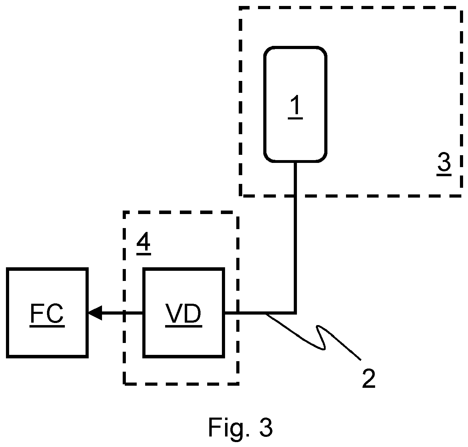

**Fig. 3** zeigt eine dritte Ausführungsform der Erfindung.

Es sind die gleichen Elemente wie in Fig. 1 gezeigt, mit dem Unterschied, dass hier die Druckluft 2 der Ansaugseite der Primärversorgungseinrichtung 4 zugeführt wird.

Im gezeigten Beispiel wird die Druckluft 2 dem Verdichter VD zugeführt. Der Verdichter VD saugt nun bereits vorverdichtete Druckluft 2 an. Somit ist die benötigte Verdichterleistung des Verdichters VD geringer, um den Sauerstoffbedarf der Brennstoffzelle FC zu erfüllen. Zudem wird durch die Druckluft 2 erreicht, dass der Verdichter VD durch diese Druckluft 2 angetrieben wird, wodurch er schneller auf die nötige Drehzahl gebracht wird und somit schneller die benötigte Verdichterleistung liefert.

### BEZUGSZEICHENLISTE

- 1: Druckluftquelle
- 2: Druckluft
- 3: Druckluftsystem
- 4: Primärversorgungseinrichtung
- FC: Brennstoffzelle
- VD: Verdichter

## Patentansprüche

1. Verfahren zur Versorgung einer Brennstoffzelle mit Druckluft eines Fahrzeugs mit den Schritten:
- Schritt (A): Versorgen der Brennstoffzelle (FC) mit einem Brennstoff und einem Oxidationsmittel durch eine Primärversorgungseinrichtung (4);
- Schritt (B): Entnehmen von Druckluft (2) aus einer Druckluftquelle (1); und
- Schritt (C): Zuführen der Druckluft (2) zu der Brennstoffzelle (FC).

2. Verfahren nach Anspruch 1, wobei
Schritt (A) im Stationärbetrieb der Brennstoffzelle (FC) ausgeführt wird.

3. Verfahren nach Anspruch 1 oder 2, wobei
Schritt (B) und Schritt (C) im Instationärbetrieb der Brennstoffzelle (FC) ausgeführt werden.

4. Verfahren nach einem der vorstehenden Ansprüche, wobei
die Schritte (A), (B) und (C) gleichzeitig ausgeführt werden.

5. Verfahren nach einem der vorstehenden Ansprüche, wobei
die Druckluftquelle (1) Teil eines Druckluftsystems (3), insbesondere eines pneumatischen Bremssystems und/oder eines Luftfedersystems, ist, und/oder einen Druckluftspeicher und/oder einen Verdichter des Fahrzeugs umfasst.

6. Verfahren nach einem der vorstehenden Ansprüche, wobei
bei Ausführung von Schritt (C) die Zuführung der Druckluft (2) direkt oder über Zwischenelemente, wie einen Befeuchter und/oder einen Verdichter und/oder eine Düse, erfolgt.

7. Verfahren nach einem der vorstehenden Ansprüche, wobei
die Druckluft, die in Schritt (C) der Brennstoffzelle (FC) zugeführt wird, zur Spülung und/oder Reinigung und/oder Regeneration der Brennstoffzelle (FC) verwendet wird.

8. Verfahren nach einem der vorstehenden Ansprüche, wobei
die Druckluft in Schritt (C) über die Primärversorgungseinrichtung (4) der Brennstoffzelle (FC) zugeführt wird, wobei die Druckluft (2) vorzugsweise zur Druckerhöhung in der Primärversorgungseinrichtung (4) und/oder zur Unterstützung eines Verdichters (VD) der Primärversorgungseinrichtung (4) verwendet wird, indem die Druckluft insbesondere in einen Ansaugbereich der Primärversorgungseinrichtung (4) zugeführt wird.

9. Verfahren nach einem der vorstehenden Ansprüche, wobei
die Druckluft (2) in Schritt (C) über eine Ausstoßsteite der Primärversorgungseinrichtung (4) der Brennstoffzelle (FC) zugeführt wird.

10. Verfahren nach einem der vorstehenden Ansprüche, wobei
das Fahrzeug zumindest durch einen Teil der durch die Brennstoffzelle (FC) bereitgestellten Leistung der angetrieben wird, und/oder wobei
das Fahrzeug als PKW, Nutzfahrzeug, Zugmaschine, LKW, Anhänger, Verbund aus Zugmaschine und Anhänger oder als Schienenfahrzeug, ausgebildet ist.

11. Vorrichtung zur Durchführung des Verfahrens nach einem der Ansprüche 1 bis 10, wobei
die Vorrichtung eine Schnittstelle zur Steuerung des Entnehmens der Druckluft (2) aus der Druckluftquelle nach Schritt (B) und/oder eine Schnittstelle zur Steuerung des Zuführens der Druckluft nach Schritt (C) aufweist, wobei
die Vorrichtung eine Datenverarbeitungseinheit aufweist, die zur Durchführung des Verfahrens nach einem der Ansprüche 1 bis 10 ausgebildet ist.

12. Versorgungssystem für eine Brennstoffzelle (FC) aufweisend:
- eine Primärversorgungseinrichtung (4), insbesondere mit einem Verdichter (VD), die dazu ausgebildet ist, die Brennstoffzelle (FC) mit einem Brennstoff und einem Oxidationsmittel zu versorgen; und
- eine Schnittstelle zu einer Druckluftquelle (1), die dazu ausgebildet ist, der Brennstoffzelle (FC) Druckluft (2) zuzuführen, wobei
das Versorgungssystem vorzugsweise eine Vorrichtung nach Anspruch 11 aufweist, und/oder wobei
das Versorgungssystem vorzugsweise zur Durchführung des Verfahrens nach einem der Ansprüche 1 bis 10 ausgebildet ist.

13. Fahrzeug zur Durchführung des Verfahrens nach einem der Ansprüche 1 bis 10, wobei
das Fahrzeug eine Brennstoffzelle (FC) und eine Primärversorgungseinrichtung (4) zur Versorgung der Brennstoffzelle (FC) mit einem Brennstoff und einem Oxidationsmittel aufweist, und wobei
das Fahrzeug eine Druckluftquelle (1) aufweist, und wobei
das Fahrzeug eine Vorrichtung nach Anspruch 11 aufweist, und/oder wobei
das Fahrzeug zur Durchführung des Verfahrens nach einem der Ansprüche 1 bis 10 ausgebildet ist, wobei
das Fahrzeug vorzugsweise als PKW, Nutzfahrzeug, Zugmaschine, LKW, Anhänger, Verbund aus Zugmaschine und Anhänger oder als Schienenfahrzeug, ausgebildet ist.

14. Computerprogrammprodukt mit Codemitteln, die, wenn sie auf einer Datenverarbeitungseinheit ausgeführt werden, diese dazu veranlassen, das Verfahren nach einem der Ansprüche 1 bis 10 auszuführen.

15. Speichermedium zum Auslesen durch eine Datenverarbeitungseinheit, wobei das Speichermedium ein Computerprogrammprodukt nach Anspruch 14 aufweist.
